# EUROPEAN PATENT APPLICATION

(11) **EP 4 588 755 A1**
(43) Date of publication of application: **23.07.2025**
(21) Application number: 25153350.1
(22) Date of filing: 22.01.2025
(51) Int. Cl.: B62B 7/06

(54) **LOCKING JOINT FOR FOLDABLE STROLLER**

(30) Priority: 22.01.2024 CN 202410089560
(71) Applicant: Wonderland Switzerland AG, 6312 Steinhausen (CH)
(72) Inventor: ZHENG, Leilei, Dongguan, Guangdong, 523648 (CN)
(74) Representative: Lucke, Andreas

(57) **Abstract**

The present disclosure provides a locking joint (100, 100A), including: a first connecting seat (110, 110A); a second connecting seat (120, 120A), the first connecting seat (110, 110A) and the second connecting seat (120, 120A) mutually pivoting around an axial direction (I) and along a circumferential direction (C); and a locking element (130, 130A) arranged between the first connecting seat (110, 110A) and the second connecting seat (120, 120A) along the axial direction (I) and movable relative to the first connecting seat (110, 110A) and the second connecting seat (120, 120A) along the axial direction (I) and engaged with the first connecting seat (110, 110A) and the second connecting seat (120, 120A), wherein the first connecting seat (110, 110A) is provided with a limiting part (116, 116A) extending along a direction parallel to the axial direction (I), and the locking element (130, 130A) is provided with an engagement part (135, 135A) extending along the direction parallel to the axial direction (I), when the locking element (130, 130A) is engaged with the second connecting seat (120, 120A), and the engagement part (135, 135A) is clamped with the limiting part (116, 116A), the first connecting seat (110, 110A) is capable of pivoting relative to the second connecting seat (120, 120A) along a positive direction (D1) of the circumferential direction (C), and the first connecting seat (110, 110A) is not capable of pivoting relative to the second connecting seat (120, 120A) along an opposite direction (D2) of the circumferential direction (C). The present disclosure further provides a child carrier (1).

## Description

### TECHNICAL FIELD

The present disclosure relates to a locking j oint, and a child carrier.

### BACKGROUND

At present, child carriers, such as child strollers, have a folding function for easy carrying out and use. The folding to be locked is mostly achieved by setting a folding hook structure to prevent the frame from accidentally unfolding after being folded. However, the common folding hook requires manual operation of a releasing element to unlock, especially when it is not possible to achieve the unfolding by one hand, leading to inconvenient operation. Additionally, the presence of the folding hook structure on the frame can make the overall appearance of the frame less aesthetic.

### SUMMARY

The present disclosure provides a locking joint, including a first connecting seat; a second connecting seat, the first connecting seat and the second connecting seat being capable of mutually pivoting around an axial direction and along a circumferential direction; and a locking element arranged between the first connecting seat and the second connecting seat along the axial direction and movable relative to the first connecting seat and the second connecting seat along the axial direction and engaged with the first connecting seat and the second connecting seat, wherein the first connecting seat is provided with a limiting part extending along a direction parallel to the axial direction, and the locking element is provided with an engagement part extending along the direction parallel to the axial direction, when the locking element is engaged with the second connecting seat and the engagement part is engaged with the limiting part, the first connecting seat is capable of pivoting relative to the second connecting seat along a positive direction of the circumferential direction, and the first connecting seat is capable of pivoting relative to the second connecting seat along an opposite direction of the circumferential direction.

In an embodiment, a plurality of first teeth arranged at intervals along the circumferential direction is arranged on an inner circumference of the first connecting seat, a plurality of second teeth arranged at intervals along the circumferential direction is arranged on an inner circumference of the second connecting seat, and a plurality engagement teeth arranged at intervals along the circumferential direction and capable of engaging with the first teeth and the second teeth is arranged on an outer circumference of the locking element.

In an embodiment, the limiting part is arranged at an end face of one of the first teeth close to the second connecting seat in the direction parallel to the axial direction. The engagement part may also be arranged at an end face of one of the engagement teeth away from the second connecting seat in the direction parallel to the axial direction.

In an embodiment, the first connecting seat is also provided with a blocking surface at a side of the limiting part in the circumferential direction, both the blocking surface and the limiting part are positioned on the same first tooth; the locking element may also be provided with a contact surface at a side of the engagement part in the circumferential direction, both the contact surface and the engagement part are positioned on the same engagement tooth.

When the locking element is engaged with the second connecting seat, and the engagement part is engaged with the limiting part, the plurality of engagement teeth may be alternately engaged with the plurality of second teeth along the circumferential direction, and at least one of the engagement teeth may be opposite to at least one of the first teeth along the direction parallel to the axial direction.

In an embodiment, the blocking surface and the contact surface are abutted against each other along the circumferential direction, and the contact surface is positioned on a side of the blocking surface along the opposite direction of the circumferential direction, to limit the limiting part from pivoting relative to the engagement part along the opposite direction to the circumferential direction.

In an embodiment, the engagement part is formed by protruding from the end face of a corresponding engagement tooth away from the second connecting seat toward the first connecting seat along the direction parallel to the axial direction, and the contact surface is positioned on a surface of the engagement part on a side along the positive direction of the circumferential direction.

In an embodiment, the engagement part is positioned on the side of the corresponding engagement tooth along the opposite direction of the circumferential direction and may not extend to the side of the corresponding engagement tooth along the positive direction of the circumferential direction.

In an embodiment, the limiting part is formed by recessing from the end face of the corresponding first tooth close to the second connecting seat towards a side away from the second connecting seat along the direction parallel to the axial direction.

In an embodiment, the limiting part is positioned on the side of the corresponding first tooth along the opposite direction of the circumferential direction, and penetrates through the corresponding first teeth along the opposite direction of the circumferential direction, and the blocking surface is positioned on the side of the limiting part along the positive direction of the circumferential direction.

When the limiting part is engaged with the engagement part, the engagement part may be at least partially embedded in the limiting part.

In an embodiment, the blocking surface and the contact surface are parallel to the axial direction.

In an embodiment, at least one of the first connecting seat and the locking element is provided with a guide inclined surface, and the guide inclined surface is configured to guide the first tooth provided with the limiting part to cross the engagement part along the positive direction of the circumferential direction.

In an embodiment, the guide inclined surface is arranged on a surface of a side of the first tooth provided with the limiting part along the positive direction of the circumferential direction, and inclined to the direction parallel to the axial direction and the circumferential direction; and/or the guide inclined surface is arranged on a surface of the side of the engagement part along the opposite direction of the circumferential direction and inclined along to the direction parallel to the axial direction and the circumferential direction.

In an embodiment, the first connecting seat is also provided with a stopping surface at a side of the blocking surface along the circumferential direction, and both the stopping surface and the blocking surface are positioned on the same first tooth.

In an embodiment, the locking element is also provided with an abutting surface at a side of the contact surface along the circumferential direction, and both the abutting surface and the contact surface are positioned on the same engagement tooth.

When the locking element is engaged with the second connecting seat and the engagement part is engaged with the limiting part, the stopping surface may abut against the abutting surface along the direction parallel to the axial direction.

In an embodiment, the stopping surface is positioned at the side of the blocking surface along the opposite direction of the circumferential direction and the side of the limiting part in the direction parallel to the axial direction, and the abutting surface is positioned at the side of the contact surface along the opposite direction of the circumferential direction and the side of the engagement part in the direction parallel to the axial direction; or, the stopping surface is positioned at the side of the blocking surface along the positive direction of the circumferential direction, and the abutting surface is positioned at the side of the contact surface along the positive direction of the circumferential direction.

In an embodiment, the engagement part is positioned at an outer end of the corresponding engagement tooth along a radial direction.

In an embodiment, the limiting part is formed by protruding from an end face of the corresponding first tooth close to the second connecting seat toward the second connecting seat along the direction parallel to the axial direction.

In an embodiment, the limiting part is positioned at a side of the corresponding first tooth along the positive direction of the circumferential direction and may not extend to the side of the corresponding first tooth along the opposite direction of the circumferential direction, and the blocking surface may be positioned on a surface of the side of the limiting part along the opposite direction of the circumferential direction.

When the limiting part is engaged with the engagement part, the engagement part may abut against the limiting part along the circumferential direction.

In an embodiment, both the blocking surface and the contact surface are inclined to the radial direction and the circumferential direction.

In an embodiment, at least one of the first connecting seat and the locking element is provided with a guide inclined surface, and the guide inclined surface is configured to guide the limiting part to cross the engagement part along the positive direction of the circumferential direction.

In an embodiment, the guide inclined surface is arranged on a surface of a side of the limiting part along the positive direction of the circumferential direction and inclined to the radial direction and the circumferential direction; and/or, the guide inclined surface is arranged on a surface of a side of the engagement part along the opposite direction of the circumferential direction, and inclined to the radial direction and the circumferential direction.

In an embodiment, an inclination angle of the contact surface is greater than an inclination angle of the guide inclined surface.

In an embodiment, the locking element is provided with a recess, and the recess is formed by being recessed from an end face of the engagement tooth provided with the engagement part away from the second connecting seat towards the second connecting seat along the direction parallel to the axial direction, and may be formed between the engagement part and the corresponding engagement tooth along the radial direction.

In an embodiment, the first connecting seat is also provided with an stopping surface, and the stopping surface is positioned at an end face of the side of the first tooth provided with the limiting part close to the second connecting seat in the direction parallel to the axial direction and positioned at the side of the blocking surface along the opposite direction of the circumferential direction, and the locking element is also provided with an abutting surface, and the abutting surface is positioned at the end face of the engagement part away from the second connecting seat in the direction parallel to the axial direction.

When the locking element is engaged with the second connecting seat and the engagement part is engaged with the limiting part, the stopping surface may abut against the abutting surface along the direction parallel to the axial direction.

In an embodiment, except for the first tooth provided with the limiting part, each of the first teeth remained has a groove that is formed by being recessed from the end face of the corresponding first tooth close to the second connecting seat towards a side away from the second connecting seat along the direction parallel to the axial direction, penetrates through the corresponding first tooth along the circumferential direction, and the groove is configured to accommodate the engagement part along the direction parallel to the axial direction.

In an embodiment, a depth of the groove is greater than or equal to a length of the engagement part.

In an embodiment, the limiting part is formed by protruding from the end face of the corresponding first tooth close to the second connecting seat toward a side of the second connecting seat along the direction parallel to the axial direction, and the blocking surface is positioned on the surface of a side of the limiting part along the opposite direction of the circumferential direction.

In an embodiment, the engagement part is formed by being recessed from the end face of the corresponding engagement tooth away from the second connecting seat towards the second connecting seat. The contact surface may be positioned on a side of the engagement part along the opposite direction of the circumferential direction, and the engagement part penetrates through the engagement tooth along the positive direction of the circumferential direction.

In an embodiment, except for the engagement tooth provided with the engagement part, each of the engagement teeth remained has a groove, the groove is formed by being recessed from the end face of the corresponding engagement tooth away from the second connecting seat towards the second connecting seat along the direction parallel to the axial direction, and penetrates through the corresponding engagement tooth along the circumferential direction, and the groove is configured to accommodate the limiting part along the direction parallel to the axial direction.

In an embodiment, the first connecting seat is provided with two limiting parts respectively arranged on two first teeth, the second connecting seat is provided with two engagement parts, the two engagement parts are respectively arranged on two engagement teeth.

In an embodiment, the locking joint includes a driving element, and the driving element is positioned between the first connecting seat and the locking element along the axial direction to drive the locking element to move towards the second connecting seat.

In an embodiment, the locking joint includes an elastic element, and the elastic element is positioned between the second connecting seat and the locking element along the axial direction to drive the locking element to move towards the first connecting seat.

The present disclosure provides a child carrier, including: a frame; and the locking joint according to the present disclosure, wherein the frame includes a handle and a linkage rod pivoted with the handle through the locking joint, wherein the handle is connected with the first connecting seat and the linkage rod is connected with the second connecting seat; the handle pivots towards the linkage rod along a positive direction of a circumferential direction to realize folding between the handle and the linkage rod; and the handle pivots away from the linkage rod along an opposite direction of the circumferential direction to realize unfolding between the handle and the linkage rod.

The present disclosure provides a child carrier, including a frame; and the locking joint according to the present disclosure, wherein the frame includes a handle and a linkage rod pivoted with the handle through the locking joint, wherein the handle is connected with the first connecting seat and the linkage rod is connected with the second connecting seat; the handle pivots towards the linkage rod along a positive direction of a circumferential direction to realize folding between the handle and the linkage rod; and the handle pivots away from the linkage rod along an opposite direction of a circumferential direction to realize unfolding between the handle and the linkage rod; the handle is provided with an operating element connected with the driving element, and the operating element is operated to drive the locking element to move towards the second connecting seat, so that the locking element is engaged with the second connecting seat and the first connecting seat is pivotable relative to the second connecting seat.

### BRIEF DESCRIPTION OF THE DRAWINGS

Fig. 1 is a side view of a frame of a child carrier according to the present disclosure in an unfolded state;
Fig. 2 is a front perspective view of the child carrier according to the present disclosure in the unfolded state;
Fig. 3 is a rear perspective view of the frame of the child carrier according to the present disclosure in a folded and locked state;
Fig. 4 is an exploded view of a locking joint according to an embodiment;
Fig. 5 is an exploded view of a locking joint according to an embodiment;
Fig. 6 is a perspective view of a first connecting seat according to an embodiment;
Fig. 7 is a perspective view of a locking element according to an embodiment;
Fig. 8 is a sectional view of the locking joint according to an embodiment when the frame is in an unfolded state;
Fig. 9 is a partial sectional view of the locking joint according to an embodiment in an unlocked state along a circumferential section;
Fig. 10 is a sectional view of the locking joint according to an embodiment when the frame is in a folded and locked state, a driving element is hidden ;
Fig. 11 is a perspective view of a locking joint according to an embodiment;
Fig. 12 is an exploded view of a locking joint according to another embodiment;
Fig. 13 is an exploded view of a locking joint according to another embodiment;
Fig. 14 is a perspective view of a first connecting seat and a locking element according to another embodiment;
Fig. 15 is a sectional view of a locking element according to another embodiment;
Fig. 16 is a schematic partial view of a locking joint according to another embodiment in an unlocked state along a circumferential direction;
Fig. 17 is a perspective view of a first connecting seat, a locking element and a spring according to another embodiment; and
Fig. 18 is a perspective view of a locking joint according to another embodiment.

### List of reference numbers is provided as follows:

1 child carrier
10, 10A handle
   11 operating element
20, 20A linkage rod
30 handlebar
40 front leg assembly
50 rear leg assembly
60 seat assembly
70 armrest
100, 100A locking joint
   110, 110A first connecting seat
      111, 111A first tooth
      112, 112A pin shaft
      113, 113A driving part
      114, 114A locking part
      115, 115A locking part
      116, 116A limiting part, notch, boss
      117, 117A groove
      118, 118A blocking surface
      119, 119A stopping surface
      S guide inclined surface
   120, 120A second connecting seat
      121, 121A second tooth
      122, 122A locking part
      123, 123A locking part
   130, 130A locking element
      131, 131A engagement tooth
      132, 132A locking tooth
      133, 133A perforation
      134, 134A locking tooth
      135, 135A engagement part, projection, rib
      136, 136A spring housing
      137A recess
      138, 138A guide inclined surface
      139, 139A contact surface
      160, 160A abutting surface
   140, 140A driving element
      141, 141A perforation
      142, 142A driving part
      150, 150A elastic element, spring
200 frame joint
I axial direction
C circumferential direction
D1 folding direction, positive direction of circumferential direction C
D2 unfolding direction, opposite direction of circumferential direction C

### DETAILED DESCRIPTION

Although the present disclosure is illustrated and described herein with reference to specific embodiments, the present disclosure should not be limited to the details shown. Rather, various modifications may be made to these details within the scope of equivalents of the claims without departing from the present disclosure.

The directional descriptions such as "front", "rear", "upper" and "lower", etc. involved herein are merely for the convenience of understanding. The present disclosure is not limited to these directions and can be adjusted according to the actual situation. Although the present disclosure has been described with reference to typical embodiments, the terminology used is illustrative and exemplary, not restrictive.

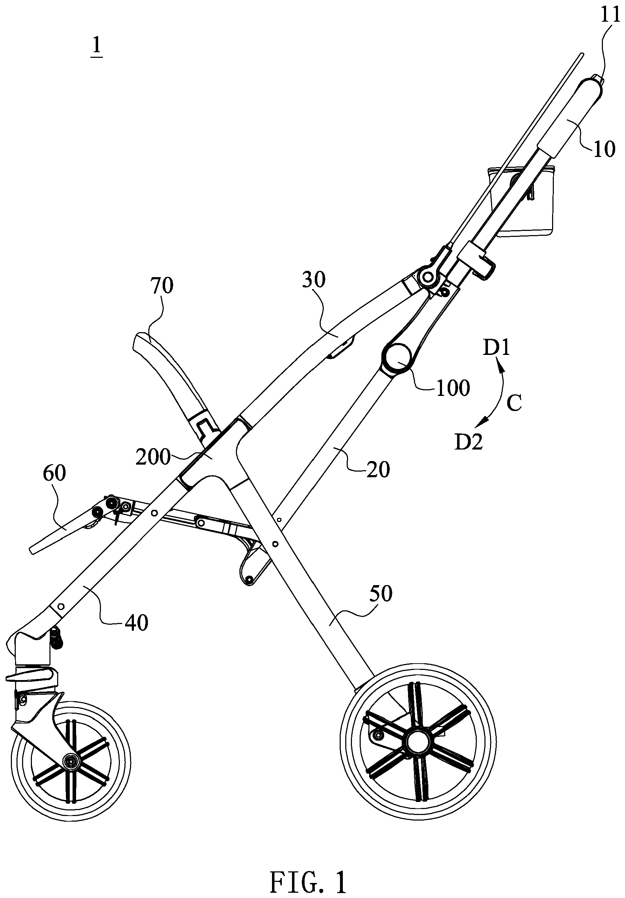

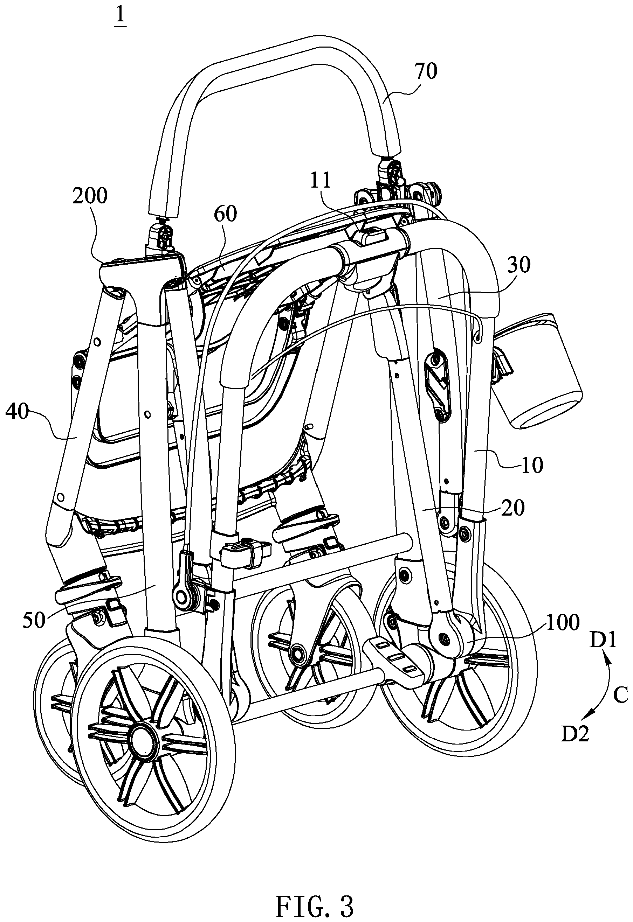

Fig. 1 is a side view of a child carrier 1 according to the present disclosure in an unfolded state. The child carrier 1 is, for example, a child stroller, and has a frame. The frame includes a handle 10, linkage rods 20, handlebars 30, front leg assemblies 40, rear leg assemblies 50, a seat assembly 60 and an armrest 70. The front leg assemblies 40, the rear leg assemblies 50 and the handlebar 30 are pivoted to each other through frame joints 200. The handlebar 30 is pivoted to the handle 10. The handle 10 is pivoted to the linkage rods 20 through locking joints 100. The other ends of the linkage rods 20 are pivoted to the rear leg assemblies 50. The locking joint 100 has a first locked state, a second locked state and an unlocked state. When the locking joint 100 is in the first locked state, the handle 10 may not pivot relative to the linkage rods 20, and both are in the locked state. When the locking joint 100 is in the second locked state, the handle 10 may only pivot relative to the linkage rod 20 along a positive direction of a pivoting direction, but not rotate relative to the linkage rod 20 along an opposite direction of the pivoting direction. When the locking joint 100 is in the unlocked state, the handle 10 may pivot relative to the linkage rod 20 along the positive and opposite directions of the pivoting direction. According to the present disclosure, when the frame is in the unfolded state, the locking joints 100 are in the first locked state, so that the handle 10 and the linkage rod 20 are relatively fixed to avoid accidental folding while a child may be seated in the frame and a caregiver may push the frame. As shown in Fig. 3, when the frame is in a folded and locked state, the locking joints 100 are in the second locked state, so that the handle 10 may only pivot relative to the linkage rods 20 along a direction close to the linkage rods 20 (a positive direction corresponding to the pivoting direction, i.e., the folding direction D1), but the handle 10 may not pivot relative to the linkage rod 20 in a direction away from the linkage rod 20 (corresponding to the opposite direction of the pivoting direction, i.e., the unfolding direction D2). When the frame is switched from the unfolded state to the folded state, the locking joint 100 is in the unlocked state while the handle 10 may pivot relative to the linkage rod 20 in a direction close to the linkage rod 20, and may also pivot relative to the linkage rod 20 in the direction away from the linkage rod 20.

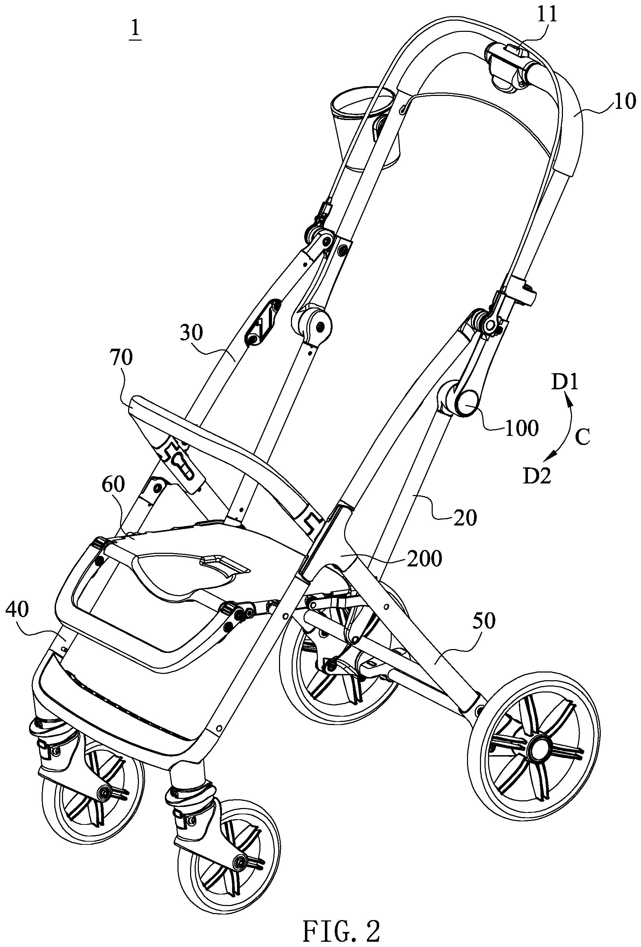

Fig. 2 is a front perspective view of the frame of the child carrier 1 according to the present disclosure in an unfolded state. As shown in Fig. 2, connection relationships of the handle 10, the linkage rods 20, the handlebar 30, the front leg assemblies 40, the rear leg assemblies 50, the seat assembly 60, and the armrest 70 are clearly seen. The handle 10 is provided with an operating element 11, for example, the operating element 11 is provided on a top horizontal bar of the handle 10, for example, the operating element 11 is a button. The operating element 11 is connected to the locking joints 100 and is configured to release a first locked state of the locking joints 100 and switch the locking joints 100 from the first locked state to an unlocked state. For example, the operating element 11 is connected to the locking joints 100 via a traction element (such as a rope, cable, etc.) extending inside the handle 10. It is known that the movement of the operating element 11 may drive the movement of some elements of the locking joints 100 through the traction element to switch the states of the locking joints 100. According to this embodiment, when the operating element 11 is operated, for example, when the operating element 11 is pressed, the locking joints 100b may switch from the first locked state to the unlocked state, so that the handle 10 may pivot relative to the linkage rod 20 in the direction close to the linkage rod 20. This also means that the handle 10 of the frame, which was originally in the unfolded state, may pivot towards a side close to the linkage rod 20 to fold the handle 10 towards the linkage rod 20. Specifically, as shown in Fig. 2, the handle 10 may be pushed towards the linkage rod 20 and rotated counterclockwise relative to the linkage rod 20 around the locking joints 100, so as to drive the linkage rods 20, the handlebars 30, the front leg assemblies 40, and the rear leg assemblies 50 to fold relative to each other. The folded and locked state is shown in Fig. 3. The caregiver may use the armrest 70 to lift the entire child carrier 1 to facilitate carrying or storage. During the transition of the frame from the unfolded state in Fig. 2 to the folded and locked state in Fig. 3, the handle 10 can both pivot relative to the linkage rod 20 to the direction close to the linkage rods 20 and the direction away from the linkage rods 20.

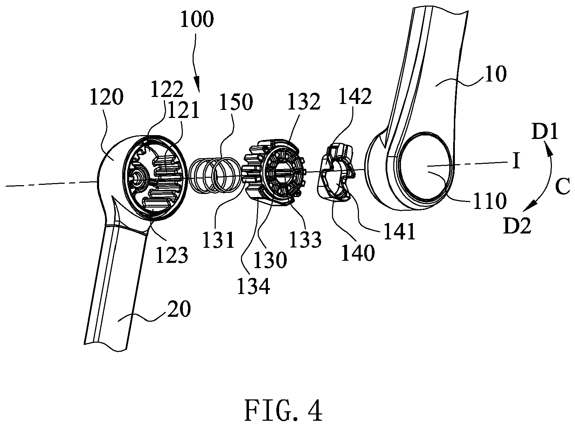

Fig. 4 is an exploded view of the locking joint 100 according to one embodiment. In this embodiment, the locking joint 100 includes a first connecting seat 110, a second connecting seat 120, a locking element 130, a driving element 140, and an elastic element 150 arranged along an axial direction I. The first connecting seat 110 is fixedly connected to the handle 10, and the second connecting seat 120 is fixedly connected to the linkage rod 20. The driving element 140, the locking element 130, and the elastic element 150 are sequentially accommodated between the first connecting seat 110 and the second connecting seat 120. The first connecting seat 110 may pivot relative to the second connecting seat 120 around the axial direction I along a circumferential direction C. It is understood that the circumferential direction C is set around the axial direction I, where the circumferential direction C corresponds to the pivoting direction, the positive direction of the circumferential direction C corresponds to the folding direction D1, and the opposite direction of the circumferential direction C corresponds to the unfolding direction D2.

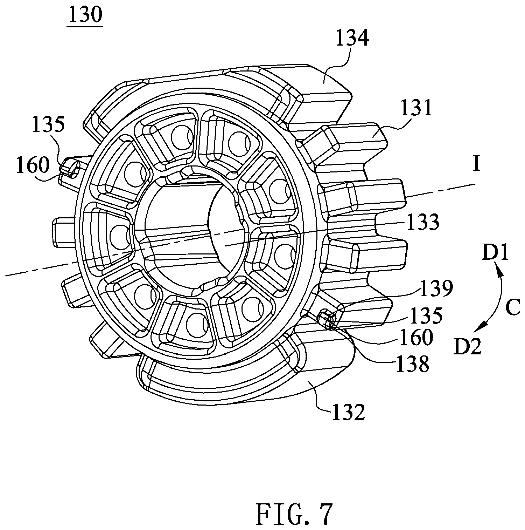

Fig. 7 is a perspective view of the locking element 130 in Fig. 4 when inverted. As shown in Figs. 4 and 7, the locking element 130 is shaped as an annular gear, having a plurality of teeth uniformly spaced at an outer circumference thereof along the circumferential direction C. The plurality of teeth include a plurality of engagement teeth 131, two locking teeth 132, 134 that are provided between the adjacent engagement teeth 131 and spaced apart from the engagement teeth 131. The locking element 130 further includes a circular perforation 133 that extends through the locking element 130 along the axial direction I. The two locking teeth 132, 134 are radially spaced apart, that is, the centers of the two locking teeth 132, 134 are oppositely arranged in a 180°, and the two locking teeth 132, 134 have different shapes. According to the present disclosure, it is also possible to have only one locking tooth 132 or 134, or the two locking teeth 132, 134 may be provided not oppositely in radial direction, that is, the centers of the two locking teeth 132, 134 are not in a 180° but set at an angle between 0° and 180°. The present disclosure is not limited thereto. It is understood that the radial direction is perpendicular to both the axial direction I and the circumferential direction C.

An elastic member 150 (for example, a compression spring belonging to a kind of spring, which will be described below as an example of a spring 150) is positioned between the second connecting seat 120 and the locking element 130 to apply a driving force for the locking element 130 to enter the first connecting seat 110.

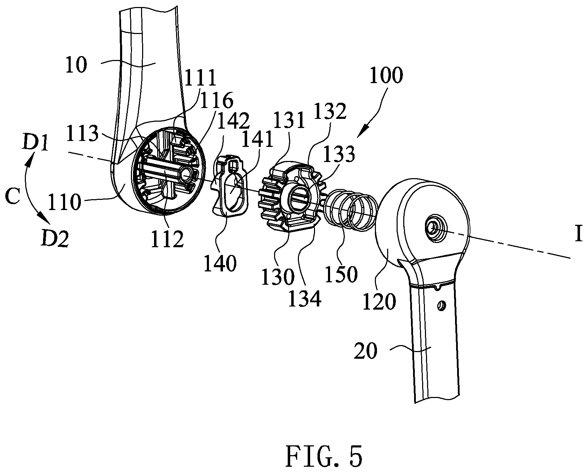

The driving element 140 has an elongated perforation 141 and a driving part 142. An upper end of the driving element 140 is connected to the operating element 11 via a traction element that extends within the handle 10. The elongated perforation 141 extends through the driving element 140 along the axial direction I and extends along the radial direction. The driving part 142 is positioned on opposite sides of the elongated perforation 141 and extends along a direction parallel to the radial direction and a direction parallel to the axial direction I. The driving part 142 is shaped as a ramp so as to be in sliding fit with the ramp-shaped driving part 113 in the first connecting seat 110 (see below and Fig. 5).

The second connecting seat 120 is provided with a circular receiving part, which has locking parts 122 and 123 arranged radially at intervals on its inner circumference, and a plurality of second teeth 121 arranged uniformly at intervals between the locking parts 122 and 123 along the circumferential direction C. When the locking element 130 enters the circular receiving part of the second connecting seat 120, the engagement teeth 131 of the locking element 130 may be staggered with the second teeth 121 of the second connecting seat 120 along the circumferential direction C while the locking teeth 132, 134 of the locking element 130 may be accommodated within the locking parts 122, 123 along the direction parallel to the axial direction I, as such, the locking element 130 may not rotate relative to the second connecting seat 120 along the circumferential direction C. Due to the different shapes of locking teeth 132, 134, the shapes of the locking parts 122 and 123 are correspondingly different, as such, the locking tooth 132 may not be engaged with an incompatible locking part 123, and the locking tooth 134 may not be engaged with an incompatible locking part 122, so that the locking element 130 may enter the circular receiving part of the second connecting seat 120 only at specific positions. The bottom portion of the second connecting seat 120 is configured to support the spring 150 along the direction parallel to the axial direction I.

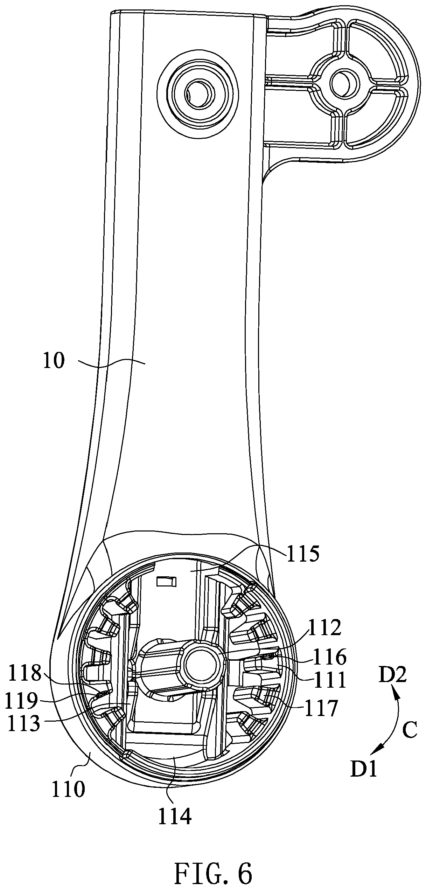

Fig. 5 is an exploded view of a locking joint 100 according to an embodiment. A perspective of Fig. 5 is opposite to that of Fig. 4, allowing a view of the internal structure of the first connecting seat 110. Fig. 6 is a perspective view of the first connecting seat 110 of Fig. 5. Corresponding to the second connecting seat 120, the first connecting seat 110 is also provided with a circular receiving part, in which locking parts 114,115 are arranged radially at intervals and a plurality of first teeth 111 are arranged uniformly at intervals along the circumferential direction C between the locking parts 114,115 along the inner circumference of the circular receiving part. The number and arrangement of the first teeth 111 correspond to the plurality of second teeth 121 of the second connecting seat 120. The relative position relationship between the locking parts 114, 115 and the plurality of first teeth 111 corresponds to that between locking parts 122, 123 and the plurality of second teeth 121. Similarly, when the locking element 130 enters the circular receiving part of the first connecting seat 110, the engagement teeth 131 of the locking element 130 may be staggered with the first teeth 111 of the first connecting seat 110 along the circumferential direction C while the locking teeth 132, 134 of the locking element 130 may move along the direction parallel to the axial direction I and may be accommodated within the two locking parts 115, 114(see Fig. 5), as such, the locking element 130 may not rotate relative to the first connecting seat 110 along the circumferential direction C. Similarly, the locking parts 114,115 are also shaped differently to accommodate the locking teeth 134, 132 along the direction parallel to the axial direction I, so that the locking element 130 can enter the circular receiving part of the first connecting seat 110 only at specific positions.

A pin shaft 112 extending toward the second connecting seat 120 along the direction parallel to the axial direction I may be provided at a center of the bottom portion of the first connecting seat 110. The other end of the pin shaft 112 may extend to the second connecting seat 120 when the first connecting seat 110 and the second connecting seat 120 are assembled. The circular perforation 133 of the locking element 130 are adapted to the pin shaft 112 in shape and size, so that the locking element 130 may rotate around the pin shaft 112.

A ramp-shaped driving part 113 is also provided on the bottom portion of the first connecting seat 110. The driving part 113 may be shaped to the ramp-shaped driving part 142 of the driving element 140. Both the driving part 113 of the first connecting seat 110 and the driving part 142 of the driving element 140 have inclined surfaces abutted against each other along the direction parallel to the axial direction I. The inclined surfaces both are inclined to the direction parallel to the axial direction I and the direction parallel to the radial direction, and are parallel to each other. Additionally, the pin shaft 112 extends through the elongated perforation 141 of the driving element 140 along the direction parallel to the axial direction I, and the width of the elongated perforation 141 in the radial direction is greater than the pin shaft 112, so that the driving element 140 may move relative to the pin shaft 112 along the radial direction through the elongated perforation 141. Because the inclined surface of the ramp-shaped driving part 113 is inclined to the direction parallel to the axial direction I and the direction parallel to the radial direction, when the operating element 11, for example, pulls the driving element 140 via a traction element along the radial direction (as shown in Figs. 4 and 5, upwards), drives the locking element 130, which is adjacent to the driving element 140 along the axial direction I, to translate to the side away from the first connecting seat 110 along the axial direction I, and compresses the spring 150.

According to this embodiment, the first connecting seat 110 includes two limiting parts 116. The two limiting parts 116 (such as notches 116, which will be described below) are arranged in one-to-one correspondence on two first teeth 111 arranged at intervals along the circumferential direction C, and the two first teeth 111 are arranged at intervals of approximately 180°. Optionally, the first connecting seat 110 may include only one limiting portion 116 disposed on one first tooth 111.The notch 116 is recessed from an end face of the corresponding first tooth 111 close to the second connecting seat 120 toward the side away from the second connecting seat 120 along the direction parallel to the axial direction I, and is provided on a side of the corresponding first tooth 111 along the opposite direction of the circumferential direction C, that is, on the side of the unfolding direction D2, and penetrates through the first tooth 111 along the opposite direction D2 of the circumferential direction C, but does not penetrate through the first tooth 111 along the positive direction D1 of the circumferential direction C, that is, the notch 116 does not penetrate through the entire corresponding first tooth 111 along the circumferential direction C, thus on the first connecting seat 110, a blocking surface 118 is formed on the side of the notch 116 along the positive direction D1 of the circumferential direction C, and a stopping surface 119 is formed on the side of the notch 116 along the direction parallel to the axial direction I. Specifically, the blocking surface 118 extends along the direction parallel to the axial direction I, and the stopping surface 119 extends along a direction intersecting with the axial direction I, for example, and the stopping surface 119 is parallel to the direction perpendicular to the axial direction I, that is, the blocking surface 118 and the stopping surface 119 are perpendicular to each other.

Apart from the first teeth 111 that have the notches 116, on the remaining first teeth 111, a groove 117 is formed by recessing from the end face of each of the first teeth 111, which is closed to the second connecting seat 120 in the direction parallel to the axial direction I, towards a side away from the second connecting seat 120 along the direction parallel to the axial direction I. The groove 117 extends through the entire corresponding first tooth 111 along the circumferential direction C but does not extend through the entire first tooth 111 along the radial direction, that is, the bottom portion of the groove 117 is not the end face of the first tooth 111 that is closest to the second connecting seat 120 along the direction parallel to the axial direction I, and a depth of the groove 117 is equal to or greater than a protruding length of a projection 135 (described below) .

An angle at which the locking element 130 is shown in Fig. 7 is a opposite side of a inverted view of an angle at which the first connecting seat 110 is shown in Fig. 6. According to this embodiment, the locking element 130 is also provided with two engagement parts 135, which are configured to accommodate in the two notches 116 of the first connecting seat 110 when the locking joints 100 are in the second locked state. The two engagement parts 135 (for example, the projections 135 described below) are correspondingly provided on two engagement teeth 131 that are spaced apart along the circumferential direction C, and the two engagement teeth 131 are arranged at approximately 180°. Optionally, the locking member 130 may include only one engagement part 135 disposed on one engagement tooth 131. Specifically, the projection 135 protrudes from the end face of the corresponding engagement tooth 131 away from the second connecting seat 120 towards the first connecting seat 110 along the direction parallel to the axial direction I, and is provided on the side of the corresponding engagement tooth 131 along the opposite direction of the circumferential direction C, but not provided on the side of the corresponding engagement tooth 131 along the positive direction D1 of the circumferential direction C, that is, the projection 135 is not continuously arranged along the circumferential direction C over the entire end face of the corresponding engagement tooth 131 away from the second connecting seat 120 in the direction parallel to the axial direction I. In other words, a cross-section of the projection 135 is smaller than that of the corresponding engagement tooth 131. The locking element 130 also has a guide inclined surface 138, a contact surface 139, and an abutting surface 160, all of which are formed on a surface of the projection 135. Specifically, the guide inclined surface 138 is formed on the surface of a side of the projection 135 along the opposite direction D2 of the circumferential direction C, and is inclined to the direction parallel to the axial direction I and the circumferential direction C. The contact surface 139 is formed on the surface of the side of the projection 135 along the positive direction D1 of the circumferential direction C, and extends along the direction parallel to the axial direction I. The abutting surface 160 is formed on the end face of the projection 135 along the direction parallel to the axial direction I. Specifically, the guide inclined surface 138 is an arc surface that is inclined to a direction parallel to the axial direction I and the circumferential direction C. The contact surface 139 is parallel to the axial direction I. The abutting surface 160 extends along a direction perpendicular to the axial direction I. The guide inclined surface 138, the abutting surface 160, and the contact surface 139 are connected to each other in sequence. The guide inclined surface 138 is configured to guide the first tooth 111 provided with the notch 116 to slide along the positive direction D1 of the circumferential direction C to the end face of the projection 135 in the direction parallel to the axial direction I, while the contact surface 139 is configured to abut against the blocking surface 118 along the positive direction D1 of the circumferential direction C, to limit the first tooth 111 provided with the notch 116 from passing over the projection 135 along the opposite direction D2 of the circumferential direction C. The abutting surface 160 is configured to abut against the stopping surface 119 along the direction parallel to the axial direction I, to limit the depth to which the projection 135 extends into the first connecting seat 110, thereby limiting the depth to which the locking element 130 extends into the first connecting seat 110. According to the present disclosure, the projections 135 may also be arranged on the locking teeth 132, 134. According to the present disclosure, the guide inclined surface 138 may also be arranged on the surface of the first tooth 111 provided with the notch 116, rather than on the surface of the projection 135. Specifically, the guide inclined surface 138 may be provided on the side of the first tooth 111 along the positive direction D1 of the circumferential direction C, to guide the first tooth 111 to slide along the positive direction D1 of the circumferential direction C to the end face of the projection 135 in a direction parallel to the axial direction I, or alternatively, the guide inclined surface 138 may be provided on the surface of the first tooth 111 provided with the notch 116 and the surface of the projection 135.

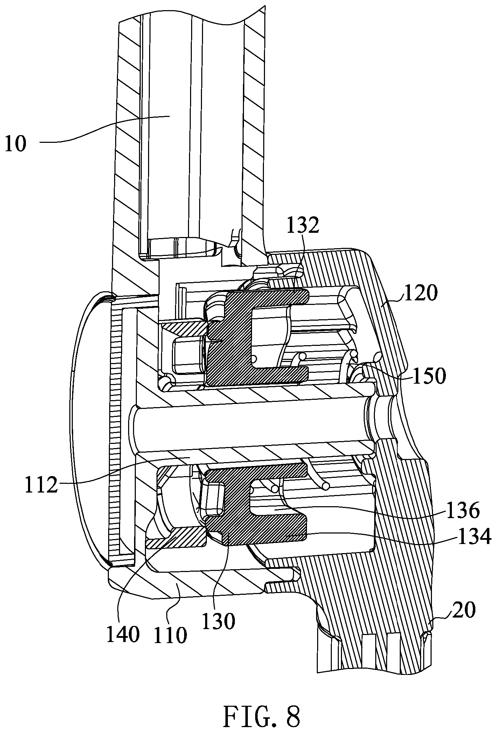

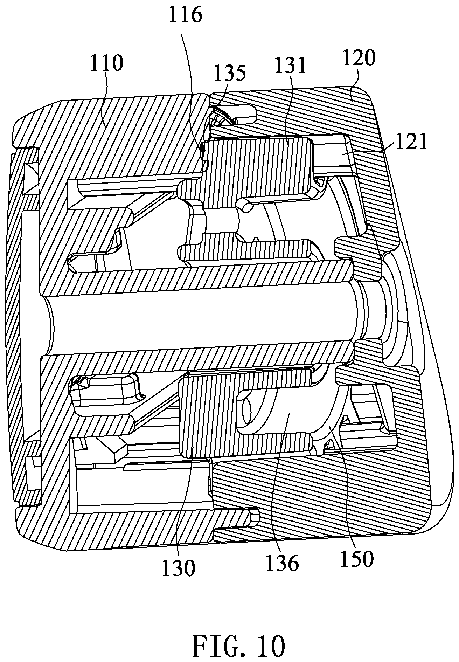

The operation of the locking joint 100 according to the present disclosure may be described with reference to Figs. 8 to 11. Fig. 8 is a sectional view of the locking joint 100 according to an embodiment when the frame is in an unfolded state. Fig. 10 is a sectional view of the locking joint 100 according to an embodiment when the frame is in a folded and locked state.

In Fig. 8, the locking joint 100 is in the first locked state, corresponding to the state in Figs. 1 and 2, where the handle 10 and the linkage rods 20 are essentially in a straight line, and the frame is locked in the unfolded state. At this time, the locking teeth 132, 134 of the locking element 130 are simultaneously accommodated within the locking parts 115, 114 of the first connecting seat 110 (see Fig. 6) and the locking parts 122, 123 of the second connecting seat 120 (see Fig. 4) along the direction parallel to the axial direction I. Additionally, the engagement teeth 131 of the locking element 130 (see Fig. 7) are also simultaneously staggered with the first teeth 111 (see Fig. 6) and the second teeth 121 (see Fig. 4) along the circumferential direction C, that is, the engagement teeth 131, the locking teeth 132, and the locking teeth 134 are all simultaneously engaged with the first teeth 111 and second teeth 121 along the circumferential direction C. The first teeth 111 and second teeth 121 are arranged opposite to each other along the direction parallel to the axial direction I, to prevent the handle 10 and the linkage rods 20 from pivoting relative to the locking element 130, so as to prevent the handle 10 and linkage rod 20 from rotating relative to each other, and thereby avoiding the handle 10 from accidentally folding relative to the linkage rod 20 when the frame is in the unfolded state. Furthermore, the projections 135 on the engagement teeth 131 are positioned between the two first teeth 111 along the circumferential direction C while the notches 116 are provided on the first teeth 111. It can be seen that the projections 135 and the notches 116 are arranged along the circumferential direction C, and the projections 135 are arranged further away from the second connecting seat 120 than the notches 116 along the direction parallel to the axial direction I.

In this situation, the driving element 140 is not operated, and the pin shaft 112 of the first connecting seat 110 abuts against one end (e.g., the upper end as shown in Fig. 8) of the elongated perforation 141 of the driving element 140. The spring 150 between the second connecting seat 120 and the locking element 130 may apply a pushing force against the locking element 130 within its spring housing 136 of the locking element 130, to cause the other side of the locking element 130 to attach against the driving element 140 and the driving element 140 attaches against the first connecting seat 110.

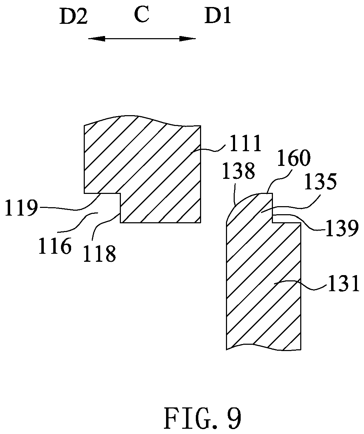

In Fig. 10, the locking joint 100 is in the second locked state, corresponding to the state in Fig. 3, where the handle 10 and the linkage rod 20 are folded, and the frame is in a folded and locked state. To achieve this state, the caregiver may press the operating element 111 as shown in Fig. 2 to distantly operate the driving element 140 (as shown in Fig. 8, for example, by pulling the driving element 140 upwards), the driving element 140 may apply a pushing force towards the second connecting seat 120 to the locking element 130 and compresses the spring 150, and thereby causing the locking element 130 to move away from the first connecting seat 110 along the axial direction I, so that the engagement teeth 131, the locking teeth 132, 134 of the locking element 130 may be disengaged from the first teeth 111 of the first connecting seat 110 but engaged only with the second teeth 121 of the second connecting seat 120 along the circumferential direction C, while the locking teeth 132, 134 of the locking element 130 are accommodated only within the locking parts 122, 123 of the second connecting seat 120 but disengaged from the locking parts 115, 114 of the first connecting seat 110 along the direction parallel to the axial direction I. However, the two projections 135 still remain accommodated within the first connecting seat 110, while the locking element 130 still may not rotate relative to the second connecting seat 120, that is, the locking element 130 is relatively fixed to the second connecting seat 120. Consequently, the first connecting seat 110 may rotate relative to the linkage rod 20 provided with the second connecting seat 120 and the locking element 130 as the handle 10 is pushed along the folding direction D1, so that the handle 10 and the linkage rod 20 are folded with each other. After the handle 10 begins to rotate in the folding direction D1, the locking joint 100 is in the unlocked state, and the caregiver may release the operating element 11. In this situation, due to the relative rotation between the first connecting seat 110 and the second connecting seat 120, the locking teeth 132, 134 may no longer be opposite to the locking parts 115, 114 along the direction parallel to the axial direction I but staggered with each other along the circumferential direction C, that is, the locking teeth 132, 134 may not be re-accommodated within the locking parts 115,114 by the spring force of the spring 150 along the direction parallel to the axial direction I. Instead, the locking teeth 132, 134 may push against the first teeth 111 through the spring force of the spring 150 along the direction parallel to the axial direction I. Specifically, the locking teeth 132, 134 may push against the end face of the first teeth 111 along the direction parallel to the axial direction I, and part of the engagement teeth 131 may also push against the end face of the first teeth 111 along the direction parallel to the axial direction I, while each of the projections 135 may move along the circumferential direction C into the plurality of grooves 117 or may be positioned between two first teeth 111 along the circumferential direction C without being blocked by the first teeth 111 along the circumferential direction C. The driving element 140 may be disengaged from its abutment with the locking element 130 and only contacts with the first connecting seat 110, being spaced apart from the locking element 130 along an axial direction I. During this process, there is no obstruction in the circumferential direction C to the relative rotation between the first connecting seat 110 and the second connecting seat 120 until the first teeth 111 provided with the notch 116 move to the side of the projection 135 along the folding direction D1, as shown in Fig. 9.

Fig. 9 is a partial sectional view of the locking joint 100 in the unlocked state along the circumferential direction, showing that the locking joint 100 is cut at the engagement tooth 131 provided with projection 135 and the first tooth 111 provided with notch 116 (the two first teeth 111 provided with the notches 116 may simultaneously move along the folding direction D1 to the side of the two projections 135 respectively; one of the first teeth 111 and its corresponding projection 135 will be taken as an example for explanation). As the first tooth 111 provided with the notch 116 continues to move along the folding direction D1 from the state as shown in Fig. 9, it may be blocked by the projection 135 in the folding direction D1 and further overcome the spring force of spring 150 (that is, further compress spring 150, further push the locking element 130 towards the second connecting seat 120, to reduce hard interference between the first tooth 111 provided with the notch 116 and projection 135) along the guide inclined surface 138 of the projection 135, and move to the end face of projection 135 (i.e., abutting surface 160) along the direction parallel to the axial direction I. During this process, the caregiver may feel the resistance on handle 10 due to the contact between the projection 135 and the first tooth 111, which indicates that the locking joint 100 is about to reach the second locked state, and the frame is about to be locked in the folded state until the notch 116 is opposite to the projection 135 along the direction parallel to the axial direction I, the locking element 130, due to the spring force of spring 150, pushes the projection 135 into the notch 116, so that the projection 135 may be engaged with the notch 116, and the abutting surface 160 then abuts against the stopping surface 119 along the direction parallel to the axial direction I, to limit the projection 135 from further extending into the first connecting seat 110. At this time, the frame is in the locked and folded state as shown in Fig. 3, the locking joint 100 is in the second locked state as shown in Fig. 10, and the caregiver may also feel that the projection 135 is pushed into the notch 116 by the spring force of spring 150, which indicates that the locking joint 100 has reached the second locked state.

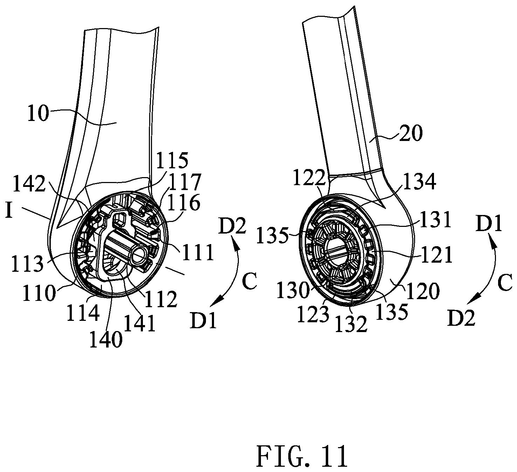

In Fig. 11, the handle 10 and the linkage rods 20 correspond to the folded and locked state of the frame in Fig. 3 and the second locked state of the locking joints 100 in Fig. 10. In Fig. 10, They are depicted as being translated and opened to show the internal structure. As shown in Figs. 10 and 11, when the locking joint 100 is in the second locked state, the two projections 135 of the locking element 130 are correspondingly accommodated within the two notches 116 of the first connecting seat 110. The blocking surface 118, due to being blocked by the contact surface 139 along the unfolding direction D2, may limit the handle 10 and the second connecting seat 120 provided with the notch 116 from rotating relative to the locking element 130 provided with the projection 135 and the linkage rods 20 in the unfolding direction D2, that is, to limit the handle 10 from pivoting relative to the linkage rod 20 along the unfolding direction D2. However, since the projection 135 only protrudes to one side of the corresponding engagement tooth 131 along the unfolding direction D2 but not to the side thereof along the folding direction D1, and the remaining first teeth 111 all have grooves 117 that accommodate the projections 135, the first teeth 111 provided with the notch 116 may still rotate relative to the projections 135 along the folding direction D1, that is, the handle 10 may still rotate relative to the linkage rod 10 and the locking element 130 along the folding direction D1. At the same time, the projection 135 (specifically the abutting surface 160) is also blocked by the stopping surface 119 in the direction parallel to the axial direction I, to be limited the projection 135 from further protruding into the first connecting seat 110 along the direction parallel to the axial direction I. This can ensure that the depth to which the locking element 130 extends into the first connecting seat 110 is much smaller than the depth to which the locking element 130 extends into the first connecting seat 110 when the locking joint 100 is in the first locked state.

In the folded and locked state, when the handle 10 is pushed along the unfolding direction D2, due to the small depth of the notch 116, the depth to which the locking element 130 extends into the first connecting seat 110 is also small. Even though the blocking surface 118 and the contact surface 139 are in contact along the circumferential direction C, the movement of the handle 10 may be blocked to some extent. However, due to the small depth of mutual contact between the blocking surface 118 and the contact surface 139, as long as the handle 10 is pushed along the opposite direction D2 of the circumferential direction C (i.e., the unfolding direction D2) with force, the first tooth 111 provided with the notch 116 can be moved along the unfolding direction D2 and the direction parallel to the axial direction I to the outside of the end face of the projection 135 in the direction parallel to the axial direction I (which causes the locking element 130 to move towards the second connecting seat 120 and compress the spring 150, to reduce the hard interference between the first tooth 111 provided with the notch 116 and the projection 135), after passing over the projection 135, moves to the side of the projection 135 provided with the guide inclined surface 138 along the circumferential direction C, that is, the first tooth 111 provided with the notch 116 abuts against the projection 135, and the projection 135 is disengaged from the notch 116. At this time, the locking joint 100 returns to the unlocked state. If the handle 10 continues to be pushed in the unfolding direction D2, the locking joint 100 may return to the first locked state, the frame returns to the unfolded state, and the handle 10 may no longer pivot relative to the linkage rod 20.

In other embodiments, the stopping surface 119 may be formed on the end face of the first tooth 111 provided with the notch 116 in the direction parallel to the axial direction I (i.e., on the side of the blocking surface 118 along the positive direction D1 of the circumferential direction C). The abutting surface 160 may be formed on the end face of the engagement tooth 131 provided with the projection 135 in the direction parallel to the axial direction I (i.e., on the side of the contact surface 139 along the positive direction D1 of the circumferential direction C). When the locking joint 100 is in the second locked state, the projection 135 is also accommodated within the notch 116, but the end face of the projection 135 in the direction parallel to the axial direction I does not abut against the surface of the first tooth 111 at the side of the notch 116 in the direction parallel to the axial direction I. Instead, the stopping surface 119 and the abutting surface 160 abut against each other along the direction parallel to the axial direction I. This can limit the depth of the engagement between the locking element 130 and the first connecting seat 110.

In other embodiments, it is also possible to arrange two projections 135 on two first teeth 111, and two notches 116 on two engagement teeth 131, a plurality of grooves 117 on the remaining engagement teeth 131 and locking teeth 132, 134. By attaching the contact surface 139 on the projection 135 with the blocking surface 118 (at this time, the blocking surface 118 is on the side of the projection 135 along the opposite direction D2 of the circumferential direction C, and the contact surface 139 is on the side of the notch 116 along the opposite direction D2 of the circumferential direction C), to limit the movement of the handle 10 relative to the linkage rod 20 along the unfolding direction D2. By contacting the end face of the projection 135 in the direction parallel to the axial direction I (i.e., the abutting surface 160) with the stopping surface 119 of the notch 116, to limit the depth of the engagement between the locking element 130 and the first connecting seat 110.

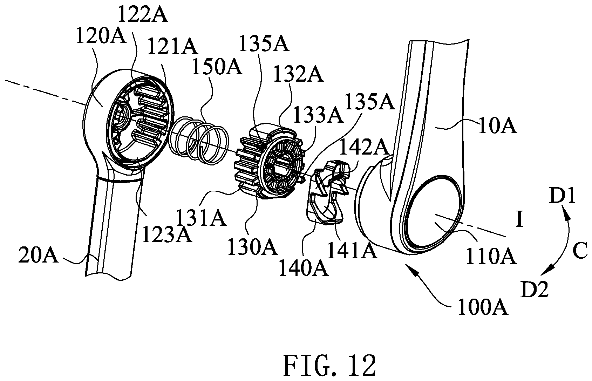

Figs. 12 to 18 show another embodiment of the locking joint 100 according to the present disclosure. To avoid repetition, parts as same as the embodiments shown in Figs. 1 to 11 will not described again.

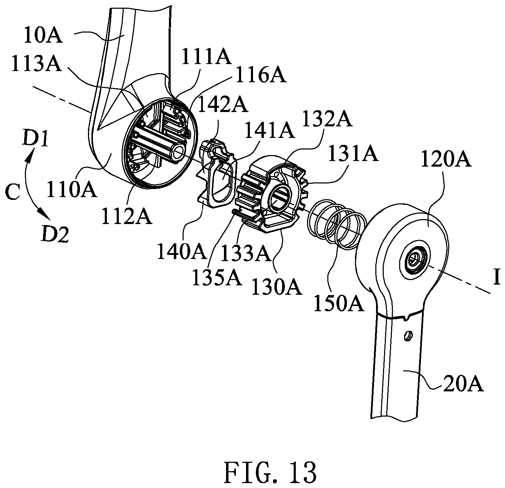

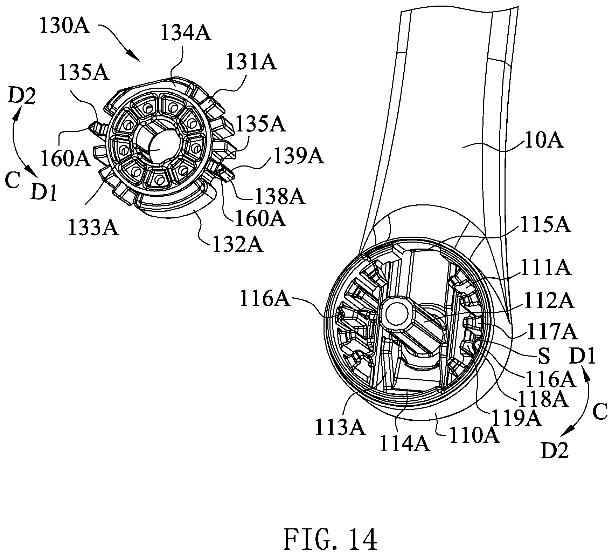

Figs. 12 and 13 are exploded views of a locking joint 100A according to another embodiment. Fig. 14 is a perspective view of a first connecting seat 110A and a locking element 130A according to another embodiment, wherein, in order to show the internal structure of the first connecting seat 110A and the locking member 130A, the first connecting seat 110A and the locking member 130A are opened translationally and the locking member 130A is rotated at an angle. In this embodiment, as shown in Figs. 12, 13 and 14, two engagement parts 135A of the locking element 130A are two ribs 135A, which will be described below. The two ribs 135A are provided in one-to-one correspondence on two engagement teeth 131A that are spaced apart along the circumferential direction C and are spaced apart at approximately 180°. Specifically, the ribs 135A extend from the end faces of the corresponding engagement teeth 131A away from the second connecting seat 120A towards the first connecting seat 110A along the direction parallel to the axial direction I, and are positioned on radially outer ends of the corresponding engagement teeth 131A and extend outward from the radially outer ends of the engagement teeth 131A along the radial direction, that is, the ribs 135A are not continuously provided along the radial direction on the entire end faces of the engagement teeth 131A away from the second connecting seat 120A in the direction parallel to the axial direction I. Optionally, the ribs 135A may also be provided on the locking teeth 132A, 134A. A guide inclined surface 138A, a contact surface 139A, and an abutting surface 160A of the locking element 130A are all formed on a surface of the rib 135A. Specifically, the guide inclined surface 138A is formed on the surface of a side of the rib 135A along an opposite direction D2 of the circumferential direction C, and is inclined to the radial direction and the circumferential direction C. The contact surface 139A is formed on the surface of the side of the rib 135A along the positive direction D1 of the circumferential direction C, also inclined to the radial direction and the circumferential direction C, that is, the contact surface 139A is also provided as a samp, and an inclination angle of the guide inclined surface 138A is greater than that of the contact surface 139A. The abutting surface 160A is formed on the end face of the ribs 135A in the direction parallel to the axial direction I. Specifically, the guide inclined surface 138A is connected to the contact surface 139A, and an angle is formed between the guide inclined surface 138A and the contact surface 139A. The angle is set as an obtuse angle. Both the guide inclined surface 138A and the contact surface 139A are parallel to the axial direction I, while the abutting surface 160A is perpendicular to the axial direction I. As shown in Fig. 14, two limiting parts 116A of the first connecting seat 110A are spaced apart along the circumferential direction C and are formed on the inner circumference of the circular receiving part. The two limiting parts 116A (provided as bosses 116A, which will be described below) are provided in one-to-one correspondence on the two first teeth 111A that are spaced apart along the circumferential direction C, and the two first teeth 111A are spaced apart at approximately 180°. The bosses 116A extend from the end face of the first tooth 111A close to the second connecting seat 120A towards the second connecting seat 120A along the direction parallel to the axial direction I. The bosses are correspondingly provided on the sides of the first teeth 111A along the positive direction D1 of the circumferential direction C, but not on the sides of the first teeth 111A along the opposite direction D2 of the circumferential direction C, that is, the bosses 116A do not cover the entire end face of the first teeth 111A along the circumferential direction C, and the bosses 116A extend along the positive direction D1 of the circumferential direction C correspondingly beyond the corresponding first teeth 111A but do not extend to the adjacent first teeth 111A. The bosses 116A are provided at the end of the corresponding first tooth 111A along the radial direction (close to the circular receiving part of the first connecting seat 110A), and a length of the bosses 116A protruding in the direction parallel to the axial direction I is less than or equal to a length of the ribs 135A protruding in the direction parallel to the axial direction I.

As shown in Fig. 14, in this embodiment, the blocking surface 118A of the first connecting seat 110A is formed on a surface of a side the boss 116A in the opposite direction D2 of the circumferential direction C. The blocking surface 118A is inclined to the circumferential direction C and the radial direction. Specifically, the blocking surface 118A has the same inclination angle as the contact surface 139A, and is parallel to the axial direction I.

As shown in Fig. 14, in this embodiment, the stopping surface 119A of the first connecting seat 110A is formed on the end face of the first tooth 111A provided with the boss 116A close to the second connecting seat 120A along the direction parallel to the axial direction I, and is positioned on the side of the blocking surface 118A in the opposite direction D2 of the circumferential direction C. The stopping surface 119A extends in a direction intersecting the axial direction I, specifically, the stopping surface 119A extends along a direction perpendicular to the axial direction I, and the blocking surface 118A and the stopping surface 119A are perpendicular to each other.

As shown in Fig. 14, in this embodiment, the first connecting seat 110A, in addition to having the blocking surface 118A and stopping surface 119A consistent with the embodiments in Figs. 1 to 10, also has a guide inclined surface S. The guide inclined surface S is formed on the side of the boss 116A along the positive direction D1 of the circumferential direction C and is inclined to the circumferential direction C and the radial direction. The guide inclined surface S serves to slidably contact with the guide inclined surface 138A along the positive direction D1 of the circumferential direction C when the locking joint 100 is in the unlocked state, so that the boss 116A moves from the side of the guide inclined surface 138A of the rib 135A to the side of the contact surface 139A of the rib 135A along the positive direction D1 of the circumferential direction C. Specifically, the guide inclined surface S has the same inclination angle as the guide inclined surface 138A, and at least a portion of the guide inclined surface S extends beyond the first tooth 111A along the positive direction D1 of the circumferential direction C.

As shown in Fig. 14, in this embodiment, in addition to the first tooth 111A provided with the boss 116A, on the other first teeth 111A, a groove 117A is formed by recessing from the end face of each first tooth 111A closed to the second connecting seat 120 in the direction parallel to the axial direction I, towards the side away from the second connecting seat 120A along the direction parallel to the axial direction I. The groove 117A extends through the entire corresponding first tooth 111A along the circumferential direction C but does not extend through the entire corresponding first tooth 111A along the radial direction. That is, the bottom portion of the groove 117A is not the end face of the first tooth 111A that is closest to the second connecting seat 120A along the direction parallel to the axial direction I. The depression depth of the groove 117A is equal to or greater than the length of the projection of the rib 135A. The groove 117A is configured to take way for the movement of the rib 135A along the circumferential direction C when the locking joint 100A is in the unlocked state.

As shown in Fig. 14, in this embodiment, the rib 135A has a height that is preferably equal to the height of the boss 116A.

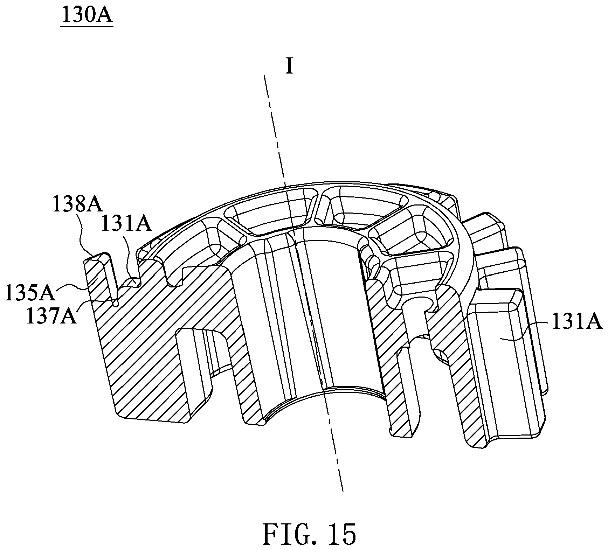

Fig. 15 is a sectional view of a locking element 130A according to another embodiment. In this embodiment, the locking element 130A also includes two recesses 137A, which are in one-to-one correspondence formed on the two engagement teeth 131A provided with ribs 135A. Each of the recesses 137A is formed by being recessed from the end face of the engagement tooth 131A away from the second connecting seat 120A towards the side of the second connecting seat 120A along the direction parallel to the axial direction I, and is formed between a free end of the rib 135A and the corresponding engagement tooth 131A along the radial direction, to enhance radial elastic deformation of the rib 135A.

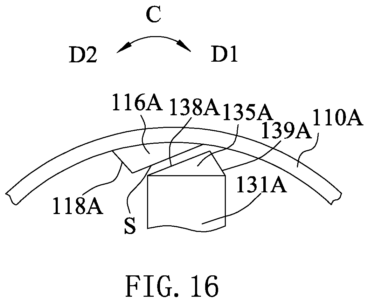

As shown in Fig. 16, Fig. 16 is a partial schematic view of the locking joint 100A according to another embodiment along the circumferential direction C in the unlocked state, showing the tooth 131A provided with the rib 135A and the boss 116A on the inner circumference of the first connecting seat 110A. In the state shown in Fig. 6, as the frame is about to reach the folded and locked state and the locking joint 100A is about to reach the second locked state, when the boss 116A continues to move along the folding direction D1 from the state shown in Fig. 16, the guide inclined surface S, which extends along the circumferential direction C, may slide against the guide inclined surface 138A, so that the boss 116A may drive the free end of the rib 135A to elastically deform along the radial direction, to facilitate the guidance of the boss 116A to slide over the rib 135A in the folding direction D1. During this process, the caregiver may feel the resistance on the handle 10A due to the contact between the rib 135A and the boss 116A, which indicates that the locking joint 100A is about to reach the second locked state and the frame is about to reach the locked and folded state.

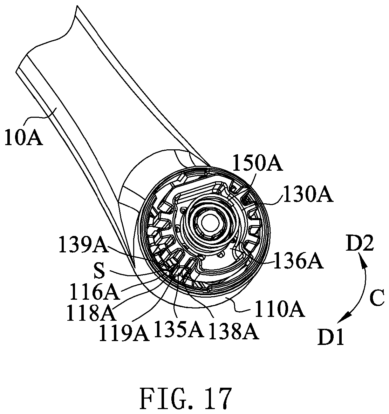

Fig. 17 is a perspective view of the first connecting seat 110A, the locking element 130A, and the spring 150A according to another embodiment. The locking element 130A is attached to the end face of the first tooth 111A of the first connecting seat 110A by using the elastic force of the spring 150A in the spring housing 136A. The contact surface 139A of the rib 135A is attached to the blocking surface 118A of the boss 116A (the rib 135A abuts against the boss 116A along the circumferential direction), so that the rib 135A is engaged with the boss 116A, thereby limiting the boss 116A from pivoting relative to the rib 135A in the unfolding direction D2, so as to limit the handle 10 from pivoting relative to the linkage rod 20 in the unfolding direction D2. At this time, the locking joint 100A is in the second locked state, and the frame is in the folded and locked state. However, the rib 135A and the boss 116A cannot be affected by each other while the first connecting seat 110A is rotated in the folding direction D1, and the handle 10 can be further folded.

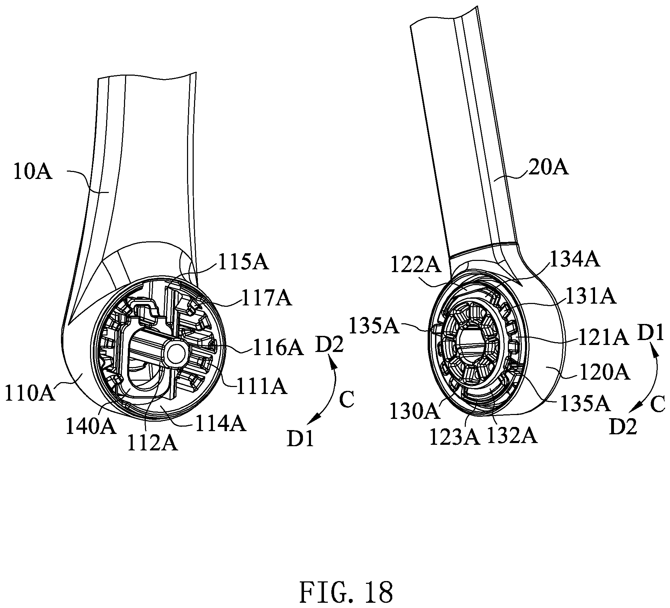

Fig. 18 is a perspective view of the locking joint 100A according to another embodiment, which is panned open to show the internal structure. The states of the components in Fig. 18 correspond to that in Figs. 11. As shown in Figs. 17 and 18, when the locking joint 100A is in the second locked state and the frame is in the folded and locked state, the first connecting seat 110A rotates in the unfolding direction D2. Due to that the contact surface 139A that is largely steep and the blocking surface 118A abut against one another, it is not easy to unfold. However, since the length of the boss 116A protruding along the direction parallel to the axial direction I is small, and the length of the rib 135A protruding in the direction parallel to the axial direction I is greater than or equal to the length of the boss 116A protruding along the direction parallel to the axial direction I, when the caregiver forcefully rotates the first connecting seat 110A along the unfolding direction D2, the boss 116A may also drive the free end of the rib 135A to elastically deform along the radial direction, facilitating the guidance of the boss 116A to slide over the rib 135A along the unfolding direction D2. This can allow the steep contact surface 139A and the blocking surface 118A to no longer be in attach, enabling the locking joint 100A to return to the unlocked state. In the state shown in Figs. 17 and 18, the abutting surface 160A of the rib 135A is also blocked by the stopping surface 119A in the direction parallel to the axial direction I, to limit the rib 135A from further protruding into the first connecting seat 110A along the direction parallel to the axial direction I. This can result in the depth to which the locking element 130A extends into the first connecting seat 110A is less than the depth to which the locking element 130A extends into the first connecting seat 110A when the locking joint 100A is in the first locked state.

## Claims

1. A locking joint (100, 100A), comprising:
a first connecting seat (110, 110A);
a second connecting seat (120, 120A), the first connecting seat (110, 110A) and the second connecting seat (120, 120A) being capable of mutually pivoting around an axial direction (I) and along a circumferential direction (C); and
a locking element (130, 130A) arranged between the first connecting seat (110, 110A) and the second connecting seat (120, 120A) along the axial direction (I) and movable relative to the first connecting seat (110, 110A) and the second connecting seat (120, 120A) along the axial direction (I) and engaged with the first connecting seat (110, 110A) and the second connecting seat (120, 120A),
wherein the first connecting seat (110, 110A) is provided with a limiting part (116, 116A) extending along a direction parallel to the axial direction (I), and the locking element (130, 130A) is provided with an engagement part (135, 135A) extending along the direction parallel to the axial direction (I),
when the locking element (130, 130A) is engaged with the second connecting seat (120, 120A) and the engagement part (135, 135A) is engaged with the limiting part (116, 116A), the first connecting seat (110, 110A) is capable of pivoting relative to the second connecting seat (120, 120A) along a positive direction (D1) of the circumferential direction (C), and the first connecting seat (110, 110A) is not capable of pivoting relative to the second connecting seat (120, 120A) along an opposite direction (D2) of the circumferential direction (C).

2. The locking joint (100, 100A) according to claim 1, wherein
a plurality of first teeth (111, 111A) arranged at intervals along the circumferential direction (C) are arranged on an inner circumference of the first connecting seat (110, 110A),
a plurality of second teeth (121, 121A) arranged at intervals along the circumferential direction (C) are arranged on an inner circumference of the second connecting seat (120, 120A),
a plurality of engagement teeth (131, 132, 134, 131A, 132A, 134A) arranged at intervals along the circumferential direction (C) and capable of engaging with the first teeth (111, 111A) and the second teeth (121, 121A) are arranged on an outer circumference of the locking element (130, 130A),
the limiting part (116, 116A) is arranged at an end face of one of the first teeth (111, 111A) close to the second connecting seat (120, 120A) in the direction parallel to the axial direction (I), and the engagement part (135, 135A) is arranged at an end face of one of the engagement teeth (131, 132, 134, 131A, 132A, 134A) away from the second connecting seat (120, 120A) in the direction parallel to the axial direction (I),
the first connecting seat (110, 110A) is also provided with a blocking surface (118, 118A) at a side of the limiting part (116, 116A) in the circumferential direction (C), both the blocking surface (118, 118A) and the limiting part (116, 116A) are positioned on the same first tooth (111, 111A);
the locking element (130, 130A) is also provided with a contact surface (139, 139A) at a side of the engagement part (135, 135A) in the circumferential direction (C), both the contact surface (139, 139A) and the engagement part (135, 135A) are positioned on the same engagement tooth (131, 132, 134, 131A, 132A, 134A);
when the locking element (130, 130A) is engaged with the second connecting seat (120, 120A), and the engagement part (135, 135A) is engaged with the limiting part (116, 116A), the plurality of engagement teeth (131, 132, 134, 131A, 132A, 134A) are alternately engaged with the plurality of second teeth (121, 121A) along the circumferential direction (C), and at least one of the engagement teeth (131, 132, 134, 131A, 132A, 134A) is opposite to at least one of the first teeth (111, 111A) along the direction parallel to the axial direction (I); the blocking surface (118, 118A) and the contact surface (139, 139A) abut against each other along the circumferential direction (C), and the contact surface (139, 139A) is positioned on a side of the blocking surface (118, 118A) along the opposite direction (D2) of the circumferential direction (C), to limit the limiting part (116, 116A) from pivoting relative to the engagement part (135, 135A) along the opposite direction (D2) to the circumferential direction (C).

3. The locking joint (100, 100A) according to claim 2, wherein
the engagement part (135, 135A) is formed by protruding from the end face of the corresponding engagement tooth (131, 132, 134, 131A, 132A, 134A) away from the second connecting seat (120, 120A) toward the first connecting seat (110, 110A) along the direction parallel to the axial direction (I), and the contact surface (139, 139A) is positioned on a surface of the engagement part (135, 135A) on a side along the positive direction (D1) of the circumferential direction (C).

4. The locking joint (100, 100A) according to claim 3, wherein
the engagement part (135, 135A) is positioned on the side of the corresponding engagement tooth (131, 132, 134, 131A, 132A, 134A) along the opposite direction (D2) of the circumferential direction (C) and does not extend to the side of the corresponding engagement tooth (131, 132, 134, 131A, 132A, 134A) along the positive direction (D1) of the circumferential direction (C);
the limiting part (116, 116A) is formed by recessing from the end face of the corresponding first tooth (111, 111A) close to the second connecting seat (120, 120A) towards a side away from the second connecting seat (120, 120A) along the direction parallel to the axial direction (I), the limiting part (116, 116A) is positioned on the side of the corresponding first tooth (131, 132, 134, 131A, 132A, 134A) along the opposite direction (D2) of the circumferential direction (C), and penetrates through the first teeth (111, 111A) along the opposite direction (D2) of the circumferential direction (C), and the blocking surface (118, 118A) is positioned on the side of the limiting part (116, 116A) along the positive direction (D 1) of the circumferential direction (C);
when the limiting part (116, 116A) is engaged with the engagement part (135, 135A), the engagement part (135, 135A) is at least partially embedded in the limiting part (116, 116A).

5. The locking joint (100, 100A) according to claim 4, wherein
the blocking surface (118, 118A) and the contact surface (139, 139A) are parallel to the axial direction (I).

6. The locking joint (100, 100A) according to claim 4 or 5, wherein
at least one of the first connecting seat (110, 110A) and the locking element (130, 130A) is provided with a guide inclined surface (138, 138A, S), and the guide inclined surface (138, 138A, S) is configured to guide the first tooth (111, 111A) provided with the limiting part (116, 116A) to cross the engagement part (135, 135A) along the positive direction (D1) of the circumferential direction (C);
the guide inclined surface (138, 138A, S) is arranged on a surface of a side of the first tooth (111, 111A) provided with the limiting part (116, 116A) along the positive direction (D1) of the circumferential direction (C), and inclined to the direction parallel to the axial direction (I) and the circumferential direction (C); and/or
the guide inclined surface (138, 138A, S) is arranged on a surface of the side of the engagement part (135, 135A) along the opposite direction (D2) of the circumferential direction (C) and inclined to the direction parallel to the axial direction (I) and the circumferential direction (C).

7. The locking joint (100, 100A) according to any one of claims 4 to 6, wherein
the first connecting seat (110, 110A) is also provided with a stopping surface (119, 119A) at a side of the blocking surface (118, 118A) along the circumferential direction (C), and both the stopping surface (119, 119A) and the blocking surface (118, 118A) are positioned on the same first tooth (111, 111A);
the locking element (130, 130A) is also provided with an abutting surface (160, 160A) at a side of the contact surface (139, 139A) along the circumferential direction (C), and both the abutting surface (160, 160A) and the contact surface (139, 139A) are positioned on the same engagement tooth (131, 132, 134, 131A, 132A, 134A);
when the locking element (130, 130A) is engaged with the second connecting seat (120, 120A) and the engagement part (135, 135A) is engaged with the limiting part (116, 116A), the stopping surface (119, 119A) abut against the abutting surface (160, 160A) by each other along the direction parallel to the axial direction (I).

8. The locking joint (100, 100A) according to claim 7, wherein
the stopping surface (119, 119A) is positioned at the side of the blocking surface (118, 118A) along the opposite direction (D2) of the circumferential direction (C) and the side of the limiting part (116, 116A) in the direction parallel to the axial direction (I), and the abutting surface (160, 160A) is positioned at the side of the contact surface (139, 139A) along the opposite direction (D2) of the circumferential direction (C) and the side of the engagement part (135, 135A) in the direction parallel to the axial direction (I); or
the stopping surface (119, 119A) is positioned at the side of the blocking surface (118, 118A) along the positive direction (D1) of the circumferential direction (C), and the abutting surface (160, 160A) is positioned at the side of the contact surface (139, 139A) along the positive direction (D1) of the circumferential direction (C).

9. The locking joint (100, 100A) according to claim 3, wherein
the engagement part (135, 135A) is positioned at an outer end of the corresponding engagement tooth (131, 132, 134, 131A, 132A, 134A) along a radial direction (R);
the limiting part (116, 116A) is formed by protruding from an end face of the corresponding first tooth (111, 111A) close to the second connecting seat (120, 120A) toward the second connecting seat (120, 120A) along the direction parallel to the axial direction (I), the limiting part (116, 116A) is positioned at a side of the corresponding first tooth (111, 111A) along the positive direction (D2) of the circumferential direction (C) and does not extend to the side of the corresponding first tooth (111, 111A) along the opposite direction (D1) of the circumferential direction (C), and the blocking surface (118, 118A) is positioned on a surface of the side of the limiting part (116, 116A) along the opposite direction (D1) of the circumferential direction (C);
when the limiting part (116, 116A) is engaged with the engagement part (135, 135A), the engagement part (135, 135A) abuts against the limiting part (116, 116A) along the circumferential direction (C).

10. The locking joint (100, 100A) according to claim 9, wherein
both the blocking surface (118, 118A) and the contact surface (139, 139A) are inclined to the radial direction (R) and the circumferential direction (C).

11. The locking joint (100, 100A) according to claim 10, wherein
at least one of the first connecting seat (110, 110A) and the locking element (130, 130A) is provided with a guide inclined surface (138, 138A, S), and the guide inclined surface (138, 138A, S) is configured to guide the limiting part (116, 116A) to cross the engagement part (135, 135A) along the positive direction (D1) of the circumferential direction (C);
the guide inclined surface (138, 138A, S) is arranged on a surface of a sideof the limiting part (116, 116A) along the positive direction (D1) of the circumferential direction (C) and inclined to the radial direction (R) and the circumferential direction (C); and/or
the guide inclined surface (138, 138A, S) is arranged on a surface of a side of the engagement part (135, 135A) along the opposite direction (D2) of the circumferential direction (C), and inclined to the radial direction (R) and the circumferential direction (C).

12. The locking joint (100, 100A) according to claim 11, wherein
an inclination angle of the contact surface (139, 139A) is greater than an inclination angle of the guide inclined surface (138, 138A, S).

13. The locking joint (100, 100A) according to any one of claims 9 to 12, wherein
the locking element (130, 130A) is provided with a recess, and the recess is formed by being recessed from an end face of the engagement tooth (131, 132, 134, 131A, 132A, 134A) provided with the engagement part (135, 135A) away from the second connecting seat (120, 120A) towards the second connecting seat (120, 120A) along the direction parallel to the axial direction (I), and is formed between the engagement part (135, 135A) and the corresponding engagement tooth (131, 132, 134, 131A, 132A, 134A) along the radial direction (R).

14. The locking joint (100, 100A) according to any one of claims 9 to 13, wherein
the first connecting seat (110, 110A) is also provided with a stopping surface (119, 119A), and the stopping surface (119, 119A) is positioned at an end face of the side of the first tooth (111, 111A) provided with the limiting part (116, 116A) close to the second connecting seat (120, 120A) in the direction parallel to the axial direction (I) and positioned at the side of the blocking surface (118, 118A) along the opposite direction (D1) of the circumferential direction (C), and
the locking element (130, 130A) is also provided with an abutting surface (160, 160A), and the abutting surface (160, 160A) is positioned at the end face of the engagement part (135, 135A) away from the second connecting seat (120, 120A) in the direction parallel to the axial direction (I);
when the locking element (130, 130A) is engaged with the second connecting seat (120, 120A), and the engagement part (135, 135A) is clamped with the limiting part (116, 116A), the stopping surface (119, 119A) abuts against the abutting surface (160, 160A) along the direction parallel to the axial direction (I).

15. The locking joint (100, 100A) according to any one of claims 3 to 14, wherein except for the first tooth (111, 111A) provided with the limiting part (116, 116A), each of the first teeth (111, 111A) remained has a groove (117, 117A) that is formed by being recessed from the end face of the corresponding first tooth (111, 111A) close to the second connecting seat (120, 120A) towards a side away from the second connecting seat (120, 120A) along the direction parallel to the axial direction (I), penetrates through the corresponding first tooth (111, 111A) along the circumferential direction (C), and the groove (117, 117A) is configured to accommodate the engagement part (135, 135A) along the direction parallel to the axial direction (I).
